# EUROPÄISCHE PATENTSCHRIFT

(11) **EP 2 820 972 B1**
(45) Veröffentlichungstag und Bekanntmachung des Hinweises auf die Patenterteilung: **25.10.2017**
(21) Anmeldenummer: 14002246.8
(22) Anmeldetag: 01.07.2014
(51) Int. Cl.: A47B 81/04, A47J 47/16, A47G 23/02, B60R 11/00, B60N 3/10

(54) **Fixiersystem für Inventargegenstände**
Fixation system for inventory articles
Système de fixation pour des objets d'inventaire

(30) Priorität: 03.07.2013 DE 202013005953 U
(43) Veröffentlichungstag der Anmeldung: 07.01.2015
(73) Patentinhaber: Dörr, Horst, 74193 Schwaigern (DE)
(72) Erfinder: Dörr, Horst, 74193 Schwaigern (DE)
(74) Vertreter: Clemens, Gerhard

(56) Entgegenhaltungen:
- WO-A1-00/00366
- DE-U1- 20 004 483
- GB-A- 2 191 679
- US-A- 5 601 271
- US-B1- 6 503 036

## Beschreibung

### TECHNISCHES GEBIET

Die vorliegende Erfindung betrifft ein Fixiersystem zur Lagesicherung von Inventargegenständen, wie beispielsweise Gläser Töpfe, Tassen, Teller, Flaschen und dergleichen Haushaltsgegenstände in Land-, Luftoder Wasserfahrzeugen, wie beispielsweise Wohnmobile, Wohnwagen, Lastkraftwagen, Schiffen, Flugzeugen mit einer Grundplatte, auf der mehrere Fixierelemente befestigbar sind, die über Anlageflächen an den Inventargegenständen zumindest bereichsweise, anlegbar, insbesondere formschlüssig anlegbar, sind, wobei die Fixierelemente und die Grundplatte so ausgebildet sind, dass die Fixierelemente ohne Einsatz von Werkzeugen lösbar an der Oberseite der Grundplatte in einem beliebigen gewünschten Raster, entsprechend der jeweiligen Konturmaße der Inventargegenstände anordenbar und verbindbar sind, die Fixierelemente jeweils unterseitig zumindest bereichsweise eine Klettverschlussfläche aufweisen und die Grundplatte eine Oberfläche aufweist, die so ausgebildet ist, dass sie mit der Klettverschlussfläche der Fixierelemente lösbar verbindbar ist, die Fixierelemente als Körperelemente mit einer in einer Draufsicht gesehen polygonartigen Umfangskontur ausgebildet sind mit einer, zwei, drei oder vier Anlageflächen für den jeweiligen Inventargegenstand und die Grundplatte aus mit einer Schere oder einem Messer zuschneidbaren Material besteht.

### STAND DER TECHNIK

Insbesondere beim Camping- und Freizeitfahrzeugen sind Einsätze für Regale oder Schränke bekannt, die fest vorgegebene Aussparungen für die Inventargegenstände aufweisen. Da die Inventargegenstände wie Gläser, Flaschen, Teller, Tassen oder Töpfe unterschiedliche Abmessungen aufweisen sind derartige Fixiersysteme nur für Inventargegenstände geeignet, die exakt die Abmessungen der Ausnehmungen aufweisen. Sind die Abmessungen der Inventargegenstände zu groß, ist eine Fixierung nicht möglich. Sind Abmessungen der Inventargegenstände zu klein, ist keine passgenaue Fixierung möglich, so dass ein Wackeln während der Fahrt nicht verhindert werden kann. Mitunter schlagen die Inventargegenstände gegeneinander, was zu einer unangenehmen Geräuschentwicklung führt oder bei zerbrechlichen Inventargegenständen beispielsweise aus Glas, Porzellan zu Beschädigungen führt.

In der deutschen Gebrauchsmusterschrift Nr. 20 2009 015 417 U1 ist ein Fixiersystem der eingangs genannten Art beschrieben. Dabei handelt sich um ein Getränke-Tray, der runde, geschlossene, nach oben offene Ausnehmungen für Trinkgläser aufweist. Zur Anpassung an unterschiedliche Durchmesser der Gläser können Ringansätze in die Ausnehmung eingesetzt werden. Die einzelnen Fixierelemente sind fest mit der Grundplatte verklebt. Das Fixiersystem ist lediglich für Gläser mit runder Umfangskontur geeignet. Eine Fixierung von Inventargegenständen mit nicht runder Umfangskontur ist nicht möglich.

In der US 5,601,271 A ist ein Fixiersystem nach dem Oberbegriff des Anspruchs 1 beschrieben, bei dem gleichartige Fixierelemente eingesetzt werden um Ladegut im Kofferraum eines Fahrzeugs zu sichern. Die Verbindung der Fixierelemente erfolgt dabei über Klettverschlusselemente mit Verbindung mit Spikes, die in einer beliebigen Position auf der Lagerplatte (Kofferraum) ohne Einsatz von Werkzeugen lösbar fixierbar sind. Jedes Fixierelement weist eine Grundplatte auf, die oberseitig eine im Querschnitt V-förmige Wandung besitzt und an der unterseitig die Klettverschlusselemente angeklebt sind. Eine sichere, raumsparende Fixierung, die sich jeweils an die Kontur des zu fixierenden Gegenstands anpasst ist aufgrund der Größe der Fixierelemente und deren gleiche Geometrie nicht möglich.

Die DE 200 04 483 U1 offenbart einen Schrank- beziehungsweise Schubladeneinsatz, der eine Lochplatte mit aufsetzbaren Pflöcken besitzt. Dabei wird der Pflock über einen Bolzen mit Gewinde durch Drehen des Pflockens in ein beliebiges Loch in die Lochplatte eingeschraubt. Die Positionierung der Pflöcke, die letztendlich die Fixierung der Gegenstände bewirken soll, ist dabei an das vorgegebene Lochraster gebunden.

Die US 6,503,036 B1 offenbart eine Lagerplatte für die Lagerfläche eines Pickup-Fahrzeuges oder SUV's, die in einem orthogonalen Raster angeordnetes Lochmuster ausweist. Zur Bildung einer rechteckförmigen Fixierwandung für zu auf der Ladefläche fixierende Gegenstände werden in einer Draufsicht gesehen L-förmige Wandelemente eingesetzt, die unterseitig Vorsprungeinheiten aufweisen, die in die jeweils entsprechenden Löcher des Lochmusters lösbar einsteckbar sind.

### DARSTELLUNG DER ERFINDUNG

Ausgehend von dem genannten Stand der Technik liegt der vorliegenden Erfindung die Aufgabe beziehungsweise das technische Problem zugrunde, ein Fixiersystem der eingangs genannten Art anzugeben, das eine Fixierung von Inventargegenständen mit unterschiedlichster Umfangskontur ermöglicht, das in jedem Einzelfall individuell an die jeweiligen Inventargegenständen anpassbar ist, mit dem sich in einfacher Art und Weise eine Fixierung von Inventargegenständen in einem Rastersystem umsetzen lässt, das einfach erstellt und auch wieder in einer andersartigen Geometrie angeordnet werden kann, das wirtschaftlich hergestellt werden kann, das wieder verwendet werden kann und das eine dauerhaft zuverlässige Funktionalität gewährleistet.

Das erfindungsgemäße Fixiersystem ist durch die Merkmale des unabhängigen Anspruchs 1 gegeben. Vorteilhafte Ausgestaltungen und Weiterbildungen sind Gegenstand der von dem unabhängigen Anspruch 1 direkt oder indirekt abhängigen Ansprüche. Das erfindungsgemäße Fixiersystem zeichnet sich demgemäß dadurch aus, dass ein erstes Fixierelement als L-förmiges Element ausgebildet ist, mit einem stehenden Schenkel und einem liegenden Schenkel, wobei auf der Unterseite des liegenden Schenkels die Klettverschlussfläche vorhanden ist und die Innenseite des stehenden Schenkels die Anlagefläche bildet, ein zweites und drittes Fixierelement als Körperelement mit einer in einer Draufsicht gesehen dreieckförmigen Umfangskontur ausgebildet ist, wobei die Anlagefläche des ersten Fixierelements an der Hypotenusenseite und die Anlageflächen des zweiten Fixierelements an den Kathetenseiten vorhanden sind, ein viertes Fixierelement als Körperelement mit einer in einer Draufsicht gesehen Viereckumfangskontur ausgebildet ist, wobei die Anlagefläche auf einer, zwei, drei oder vier Umfangsseiten vorhanden ist, die Anlagefläche/n eine konkave Kontur aufweist/en.

Dadurch, dass die Fixierelemente lösbar in einem beliebigen gewünschten Raster auf der Grundplatte befestigbar sind, ist eine Anpassung an die Geometrie unterschiedlichster Inventargegenstände problemlos möglich, wobei gleichzeitig eine dauerhaft zuverlässige Fixierung gewährleistet werden kann. Ein Inventargegenstand wird beispielsweise durch mehrere Fixierelemente fixiert.

Bevorzugt ist die Grundplatte beziehungsweise die Oberseite der Grundplatte aus Velours, wobei es besonders vorteilhaft ist, die Grundplatte selbst aus einem Material zu gestalten, das mit einer Schere oder einem Messer zuschneidbar ist, so dass diese an die unterschiedlichste Geometrie von Schränken oder Regalen problemlos anpassbar ist. Eine besonders wirtschaftliche Herstellung wird dadurch gewährleistet, dass die Fixierelemente aus Kunststoff, insbesondere weichem Kunststoff bestehen, der bevorzugt als geschäumter Kunststoff ausgebildet sein kann, wodurch eine materialschonende Fixierung gewährleistet wird. Als Kunststoffmaterial selbst kommen Elastomere, beispielsweise PU oder PU Weichschaum in Betracht.

Eine besonders vorteilhafte Ausgestaltung, die problemlos eine Fixierung von Inventargegenständen in einem vorgegebenen Rastermaß bei unterschiedlichster Geometrie ermöglicht, zeichnet sich dadurch aus, dass das Fixierelement als Körperelement mit einer in einer Draufsicht gesehen polygonartigen Umfangskontur ausgebildet ist mit einer, zwei, drei oder vier Anlageflächen für den jeweiligen Inventargegenstand.

Da viele Inventargegenstände einen runde Umfangskontur aufweisen, wie beispielsweise Tassen, Töpfe, Gläser, ist es besonders vorteilhaft, dass die Anlagenfläche/n eine konkave Kontur aufweist/en.

Eine erste geometrische Ausführungsvariante zeichnet sich dadurch aus, dass das Fixierelement als Körperelement mit einer in einer Draufsicht gesehen dreieckförmigen Umfangskontur ausgebildet ist, wobei die Anlagefläche an der Hypotenusenseite und/oder die Anlageflächen an den Kathetenseiten vorhanden sind.

Diese erste Ausführungsvariante kann in besonders vorteilhafter Art und Weise durch eine zweite Ausführungsvariante ergänzt werden, die sich dadurch auszeichnet, dass das Fixierelement als Körperelement mit einer in einer Draufsicht gesehen Viereckumfangskontur ausgebildet ist, wobei die Anlagefläche auf einer, zwei, drei oder vier Umfangsseiten vorhanden ist.

Mit beiden Varianten lässt sich beispielsweise problemlos ein orthogonales Raster zum Fixieren von Inventargegenständen herstellen.

Um die Beanspruchung der Grundplatte beim Einstellen der Inventargegenstände zu vermindern, zeichnet sich eine besonders bevorzugte Ausgestaltung dadurch aus, dass das Fixierelement im Bereich der Anlagefläche/n unterseitig eine angeformte Vorsprungeinheit aufweist. Dadurch, dass die Inventargegenstände auf der Vorsprungeinheit oberseitig gelagert sind, ist eine besonders schonende Lagerung gegeben, die bei Verwendung von Weichschaum für die Fixierelemente darüber hinaus Schall dämpfende Eigenschaften aufweist. Durch das Eigengewicht des Inventargegenstands wird die sichere Fixierung der Fixierelemente auf der Grundplatte verstärkt.

Eine besonders vorteilhafte Ausgestaltung zeichnet sich dadurch aus, dass das Fixierelement als L-förmiges Element ausgebildet ist.

Mit den beschriebenen Fixierelementen ist es in einfacher Art und Weise möglich, durch zwei, drei oder vierseitig oder mehr diametral gegenüberliegende Anordnung von Elementen ein Fixiersystem zu schaffen, mit dem Inventargegenstände unterschiedlichster Umfangskontur sicher fixiert werden können, mit dem problemlos ein raumsparendes Rastersystem zum Fixieren der Inventargegenstände hergestellt werden kann und das problemlos an unterschiedlichste Abmessungen sowohl der zur Verfügung stehenden unterschiedlichen Flächen als auch der unterschiedlichen Inventargegenstände ermöglicht.

Ein Fixiersystem, dass insbesondere geeignet ist Flaschen sicher zu fixieren zeichnet sich durch folgende Fixierelemente aus:
- ein Fixierelement, das eine einseitig seitliche nach oben offene Ausnehmung mit zwei gegenüberliegenden Seitenwänden und einer Stirnwand aufweist, wobei die Ausnehmungskontur bereichsweise einer Außenkontur eines Flaschenhalters angepasst ist,
- ein Fixierelement, das zweiseitig aneinander grenzend seitlich und nach oben offene Ausnehmung mit einer Seitenwand und einer Stirnwand aufweist und
- ein Fixierelement, das zwei einer Mittelwand gegenüberliegende seitlich und nach oben offene Ausnehmungen mit einer gemeinsamen Stirnwand aufweist, wobei die beiden letztgenannten offenen Ausnehmungen bereichsweise dem unteren Endbereich einer Flaschenform angepasst sind. Besonders bevorzugt sind die Ausnehmungen zumindest bereichsweise in einem Schnitt parallel zur Stirnwand gesehen mit konkaver Oberflächenkontur ausgestaltet, die insbesondere geeignet ist, Flaschen mit runden Konturen oder Dosen oder dergleichen runden Inventargegenstände zuverlässig zu fixieren.

Zum Verbessern des Einführvorgangs der Inventargegenstände in die aufgestellten Fixierelemente des Fixiersystems zeichnet sich eine vorteilhafte Ausgestaltung dadurch aus, dass die Anlagefläche/n im oberen Randbereich eine Fase aufweist/en.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematische Perspektivdarstellung eines Fixiersystems mit auf einer Grundplatte angeordneten lösbar befestigten Fixierelementen zur Fixierung unterschiedlichster Inventargegenstände, bereichsweise in einem vorgegebenen Raster,
- Fig. 2: schematische Perspektivdarstellung des Fixiersystems gemäß Fig. 1 mit einer die Grundplatte seitliche umgebenden Seitenwänden und einer rückseitig angeordneten Rückwand,
- Fig. 3: schematische Perspektivdarstellung des Fixiersystem gemäß Fig. 1 ohne Darstellung der Inventargegenstände,
- Fig. 4: schematische Perspektivdarstellung eines ersten Fixierelements, das L-förmig ausgebildet ist,
- Fig. 5: schematische Perspektivdarstellung eines zweiten Fixierelements mit dreieckförmiger Umfangskontur und einer konkaven Anlagefläche,
- Fig. 6: schematische Perspektivdarstellung eines dritten Fixierelements mit dreieckförmiger Umfangskontur und zwei konkaven Anlageflächen,
- Fig. 7: schematische Perspektivdarstellung eines vierten Fixierelements als Viereckkörper mit vier konkaven Anlageflächen,
- Fig. 8: Perspektivdarstellung eines fünften Fixierelements als Dreieckkörper mit einer konkaven Anlagefläche und unterseitig angeformter Vorsprungeinheit,
- Fig. 9a: Perspektivische Unteransicht des fünften Fixierelements gemäß Fig. 8 mit Darstellung einer unterseitigen Klettverschlussfläche,
- Fig. 9b: Perspektivische Unteransicht des fünften Fixierelements gemäß Fig. 8 mit Darstellung einer unterseitigen Saugnapfeinheit,
- Fig. 10: schematische Perspektivdarstellung eines sechsten Fixierelements als Dreieckkörper mit zwei Anlageflächen mit unterseitig angeformten zwei Vorsprungeinheiten,

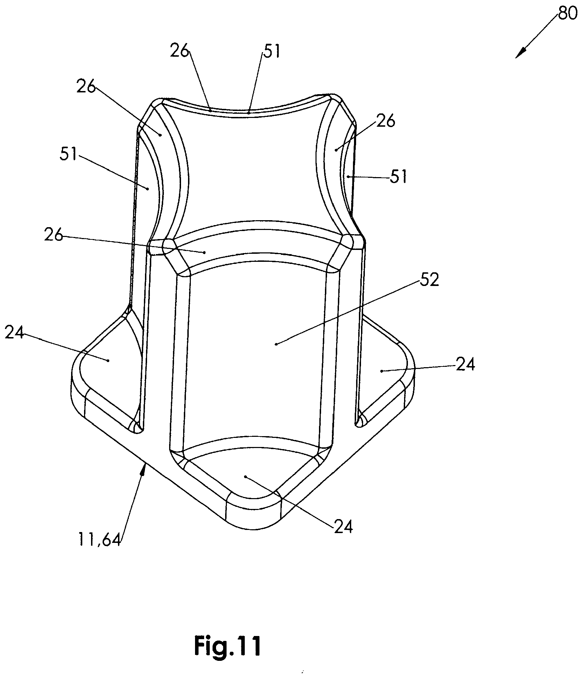

- Fig. 11: schematische Perspektivdarstellung eines siebten Fixierelements mit Viereckkörper und vier konkaven Anlageflächen mit unterseitig je Anlagefläche angeformter Vorsprungeinheit,
- Fig. 12: schematische Perspektivdarstellung eines achten Fixierelements mit einer seitlich und nach oben offenen Ausnehmung,
- Fig 13.: schematische Perspektivdarstellung eines neunten Fixierelements mit einer nach zwei Seiten und nach oben offenen Ausnehmung und
- Fig. 14: schematische Perspektivdarstellung eines zehnten Fixierelements mit zwei gegenüberliegenden Ausnehmungen, die nach zwei Seiten und nach oben offen sind.

### WEGE ZUM AUSFÜHREN DER ERFINDUNG

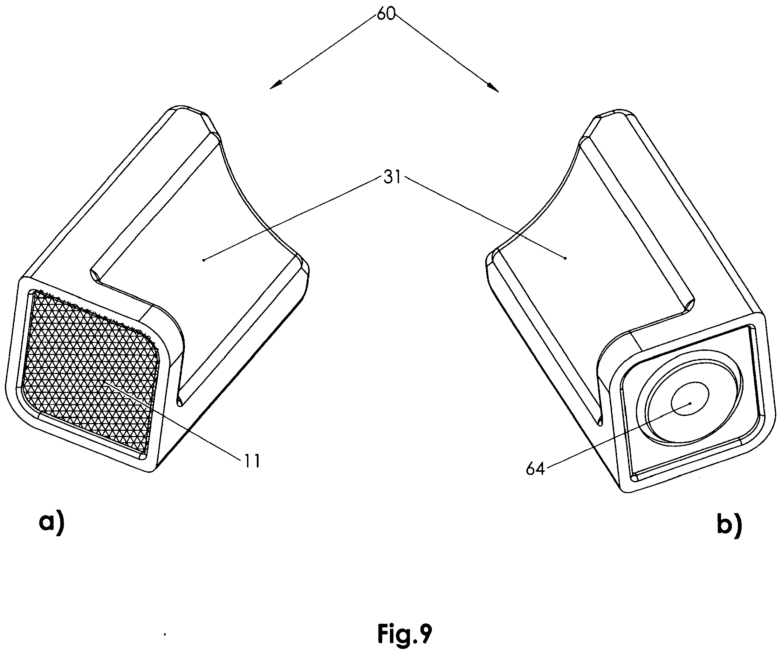

In den Figuren ist ein Ausführungsbeispiel eines Fixiersystem 10 dargestellt, das sich aus unterschiedlichsten Fixierelementen 20, 30, 40, 50, 60, 70, 80, 90, 100,110 aufbaut. Die genannten Fixierelemente sind auf einer Grundplatte 12 anordenbar. Unterseitig weist jedes Fixierelement eine Klettverschlussfläche 11 oder eine Saugnapfeinheit 64 (siehe beispielsweise Fig. 9a und b als Ausführungsbeispiele) auf. Die Oberseite der Grundplatte 12 ist jeweils so ausgebildet, dass sie bei Kontakt mit den Klettverschlussflächen 11 oder den Saugnapfeinheiten 64 der Fixierelemente eine lösbar fixierte Klett- oder Saugverbindung eingeht. Bei der Klettverbindung ist die Oberfläche der Grundplatte 12 zum Verhaken mit der Klettverschlussfläche 11 geeignet und bei der Saugerverbindung ist die Oberfläche der Grundplatte 12 glatt ausgebildet.

Die Fixierelemente sind beispielsweise aus einem weichem Kunststoffschaummaterial geformt.

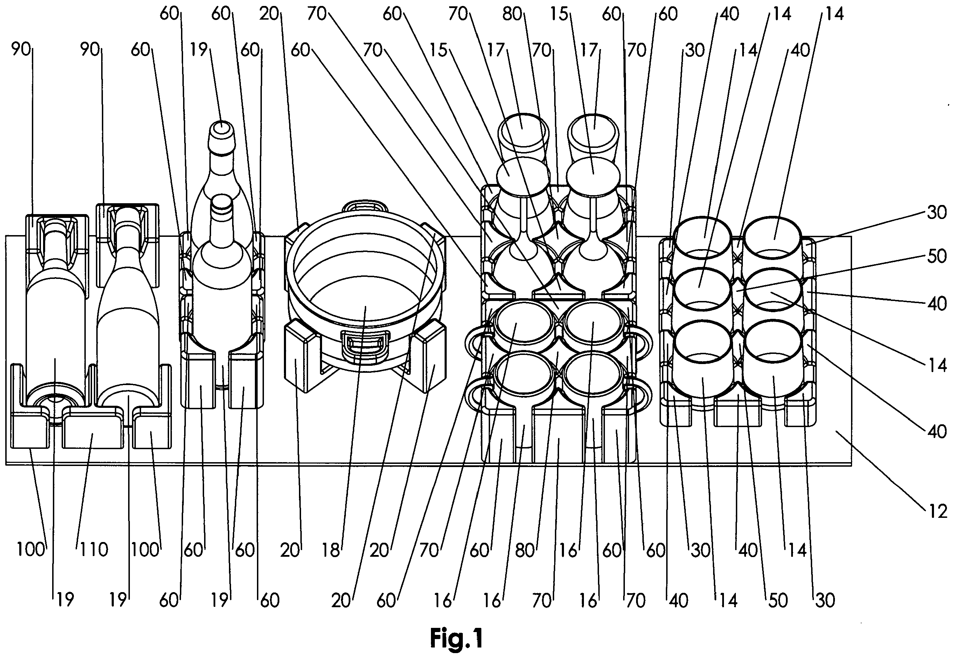

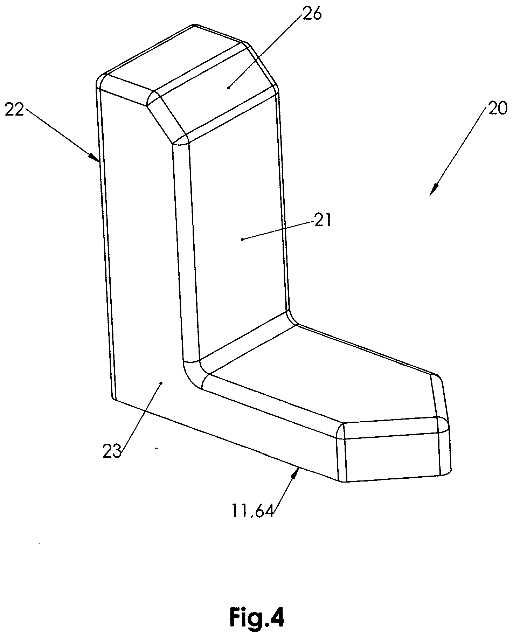

In Fig. 4 ist ein erstes Fixierelement 20 als Teil des Fixiersystems 10 dargestellt, das als L-förmiger Körper ausgebildet ist mit einem stehenden Schenkel 22 und einem liegenden Schenkel 23. Auf der Unterseite des liegenden Schenkels 23 ist die Klettverschlussfläche 11 vorhanden. Die Innenseite des stehenden Schenkels 22 bildet eine Anlagefläche für den zu fixierenden Inventargegenstand. Die Oberseite des liegenden Schenkels 23 bildet gleichzeitig eine Auflagefläche für das zu fixierende Lagergut. Oberseitig ist im Endbereich der Anlagefläche 21 eine Fase 26 vorhanden, das heißt der Kantenbereich ist hier gebrochen. Werden derartige erste Fixierelemente beispielsweise in einem kreisförmigen Umfang in einem Umfangswinkel von jeweils 90 ° angeordnet und auf der Grundplatte 12 fixiert, so steht ein Fixiersystem für die Fixierung eines außenumfangsmäßig runden Inventargegenstandes, zum Beispiel eines Topfes 18 (siehe Fig. 1) zur Verfügung.

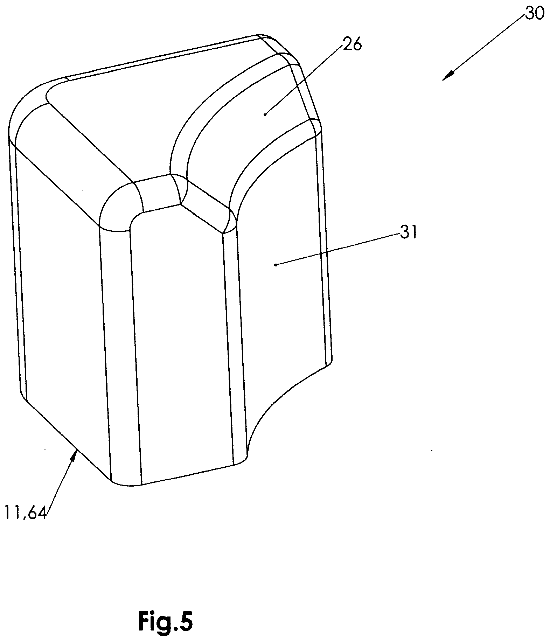

In Fig. 5 ist ein zweites Fixierelement 30 dargestellt, das in einer Draufsicht gesehen einen dreieckförmigen Körper darstellt, auf dessen Unterseite die Klettverschlussfläche 11 vorhanden ist. Eine Dreieckseite bildet eine zweite durchgehende Anlagefläche 31, die in einem Horizontalschnitt eine konkave Krümmung aufweist. Im oberen Endbereich der Anlagefläche 31 ist ebenfalls eine Fase 26 vorhanden.

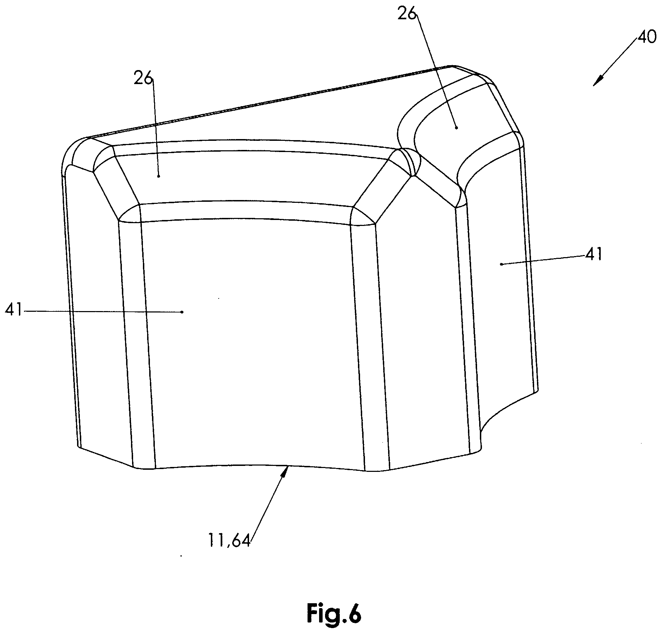

Das in Fig. 6 dargestellte dritte Fixierelement 40 ist ebenfalls als Dreieckkörper ausgestaltet und unterscheidet sich von dem zweiten Fixierelement 30 dadurch, dass zwei Dreieckseiten als dritte konkave Anlagefläche 41 ausgebildet sind.

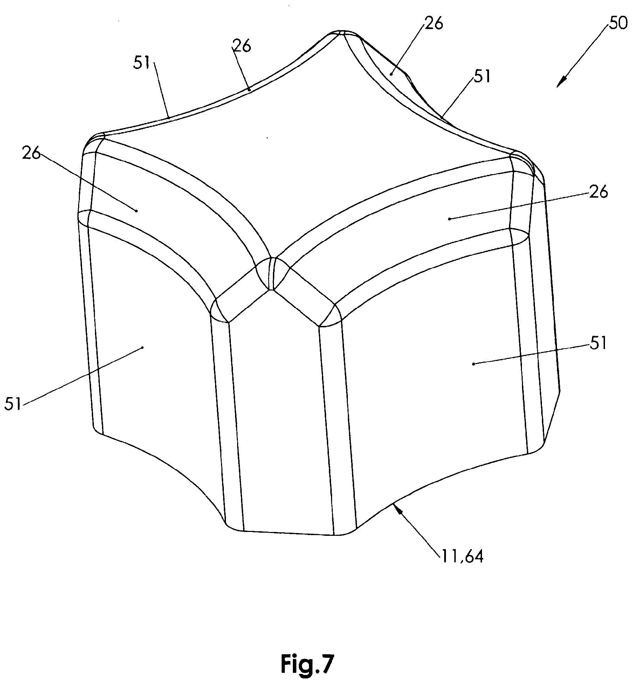

Ein in Fig. 7 dargestellte viertes Fixierelement 50 ist als würfelförmiger Körper mit unterseitiger Klettverschlussfläche 11 ausgebildet, wobei die vier Seitenflächen jeweils eine vierte Anlageflächen 51 mit konkaver Krümmung aufweisen. Oberseitig ist jeweils im Endbereich der vierten Anlagefläche 51 eine Fase 26 vorhanden.

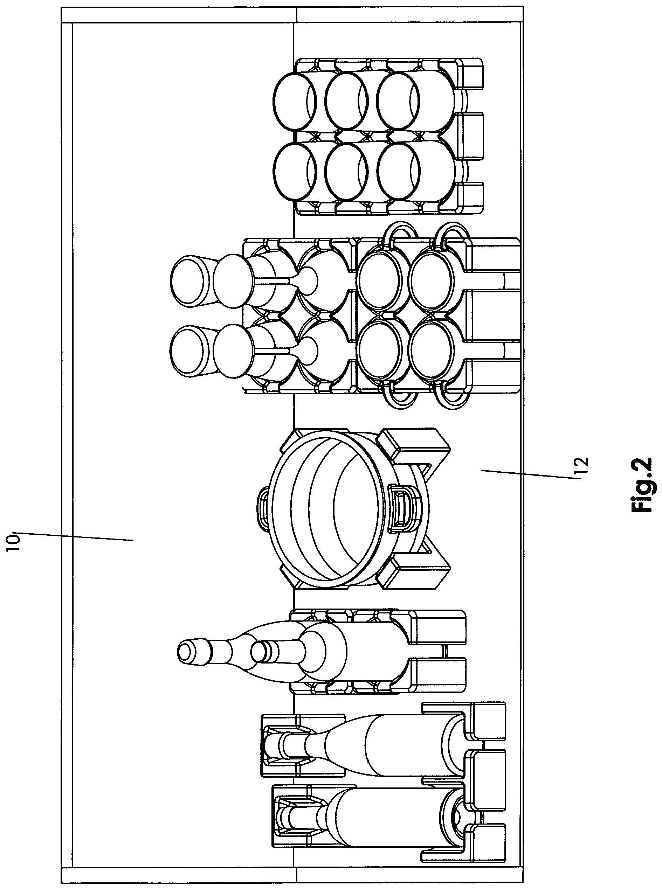

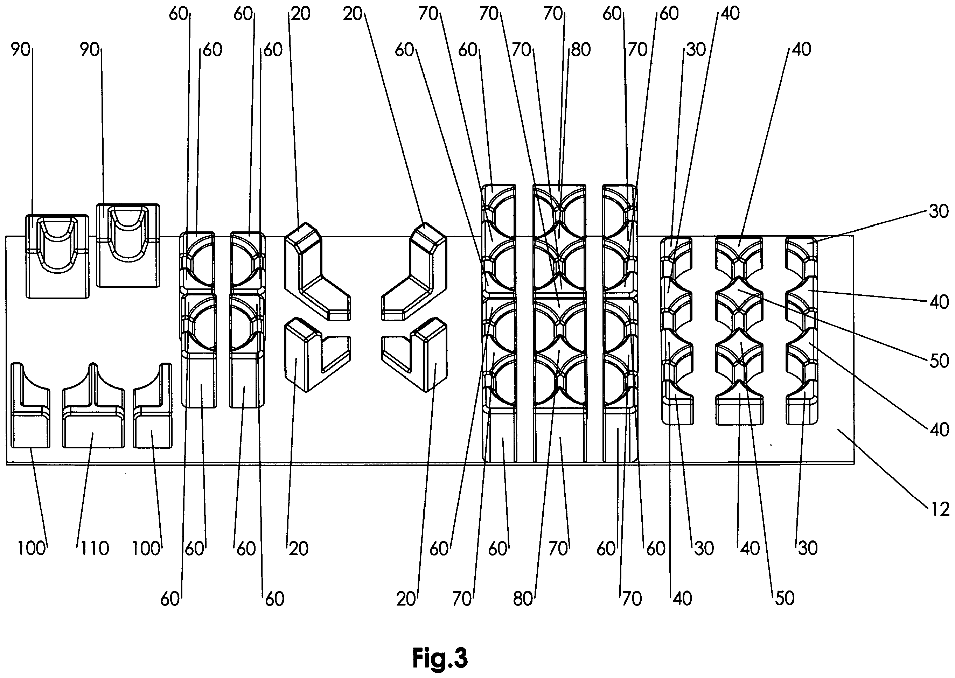

Das zweite, dritte und vierte Fixierelement 30, 40, 50 bildet innerhalb des Fixiersystems 10 ein Unterfixiersystem, das rasterförmig anordenbar ist. Die Anordnung ist in den Figuren 1 bis 3 im linken Bereich der Grundplatte 12 als eine Ausführungsmöglichkeit dargestellt. Das zweite Fixierelement 30 ist jeweils im Eckbereich angeordnet. Zwischen den zweiten Fixierelementen 30 sind im Seitenbereich dritte Fixierelemente 40 vorhanden und im Inneren des von dem zweiten und dritten Fixierelement 30, 40 umrandeten Gebiets sind vierte Fixierelemente 50 angeordnet, wobei alle Fixierelemente 30, 40, 50 in einem vorgegebenen Rastermaß lösbar an der Grundplatte 12 fixiert sind, so dass jeweils durch vier diametral gegenüberliegende Fixierelemente 30, 40,50 eine Lageraufnahme für beispielsweise einen Becher 14 geschaffen wird, wobei die Becher entsprechend der rastermäßig angeordneten zweiten, dritten und vierten Fixierelemente 30, 40, 50 ebenfalls in einem Raster angeordnet sind.

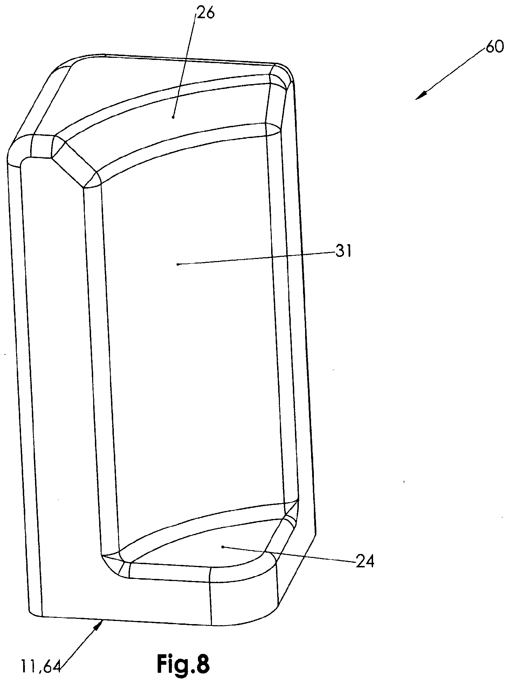

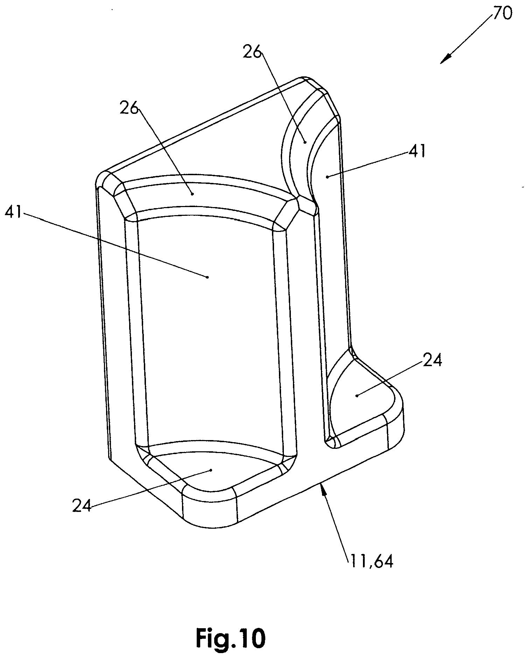

In den Figuren 8, 9 und 10 ist ein fünftes, sechstes und siebtes Fixierelement 60, 70, 80 dargestellt, das prinzipiell den gleichen Aufbau aufweist wie das zweite, dritte und vierte Fixierelement 30, 40, 50 mit dem Unterschied, dass die Fixierelemente 60, 70, 80 eine größere Höhe aufweisen und unterseitig an den Anlagenflächen 31, 41, 51 jeweils eine dreieckförmige Vorsprungeinheit 24 aufweisen, die als Auflagefläche für den zu fixierenden Inventargegenstand dienen. Gleiche Bauteile tragen das gleiche Bezugszeichen und werden nicht noch einmal erläutert.

In den Figuren 9a und b ist das fünfte Fixierelement 60 in zwei Varianten von der Unterseite her perspektivisch dargestellt. In Fig. 9a ist unterseitig eine Klettverschlussfläche 11 vorhanden, die mit der entsprechenden Oberseite der Grundplatte 12 beim Aufsetzen des Fixierelements 60 in Wirkverbindung steht, so dass das Fixierelement 60 lösbar auf der Grundplatte 12 fixiert ist. Alternativ kann unterseitig an den Fixierelementen 60 - im Ausführungsbeispiel gemäß Fig. 9b - eine Saugnapfeinheit 64 angeordnet sein, die beim Aufsetzen des Fixierelements 60 auf die Grundplatte 12 durch entsprechenden Andrückdruck eine saugende Verbindung zur Oberseite der Grundplatte 12 herstellt, die zu diesem Zweck oberseitig glatt ausgebildet ist. Auch dadurch ist eine dauerhaft zuverlässige lösbare Fixierung des Fixierelements auf der Grundplatte umsetzbar.

Eine rastermäßige Fixierung mittels der Fixierelemente 60, 70, 80 ist in den Figuren 1 bis 3 als zweite Fixierelementgruppe von links dargestellt. Die rastermäßige Anordnung ähnelt der Anordnung wie bei den Fixierelementen 30, 40, 50 links daneben, wobei wie in Fig. 1 beispielhaft dargestellt, sind dort mittels der rasterförmig angeordneten Fixierelemente 60, 70, 80 Gläser 15,17 beziehungsweise Tassen 16 fixiert.

Von jeweils vier fünften Fixierelementen 60 lassen sich auch problemlos stehende Flaschen 19 auf der Grundplatte 12 fixieren (siehe zweite Fixiergruppe von rechts in Fig. 1).

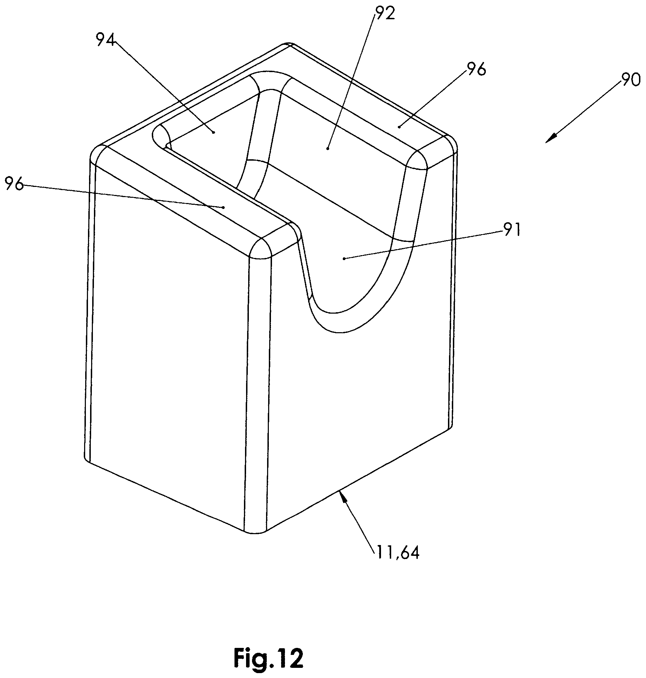

In Fig. 12 ist ein achtes quader- oder würfelförmiges Fixierelement 90 dargestellt mit in einer Draufsicht gesehen quadratischen Umfangskontur, wobei im oberen Endbereich eine erste Stirnwand 94 und zwei Seitenwände 96 angeformt sind, so dass eine nach oben und seitlich nach vorne offene erste Ausnehmung 92 gebildet wird. Die erste Ausnehmung 92 weist in einem Schnitt parallel zur Stirnwand 94 gesehen eine konvexe Krümmung auf und bildet eine achte Anlagefläche 91. Ein derartiges Fixierelement 90 ist beispielsweise geeignet, den Flaschenhals einer liegenden Flasche bereichsweise formschlüssig aufzunehmen.

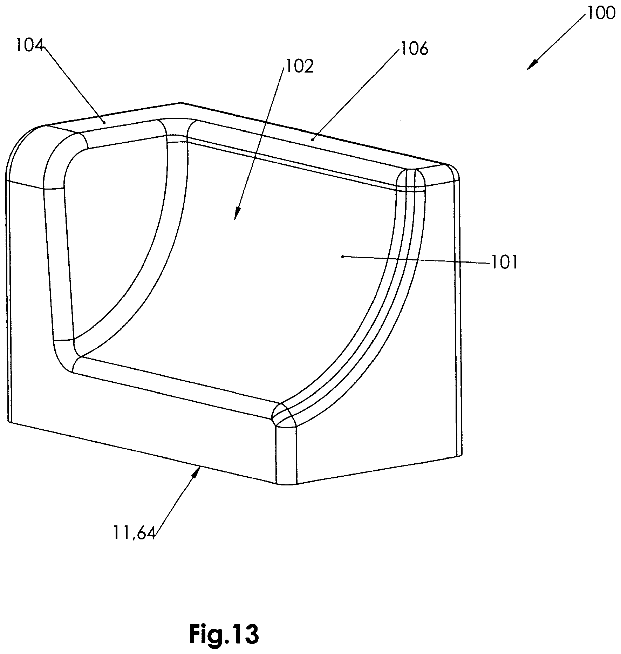

In Fig. 13 ist ein neuntes Fixierelement 100 dargestellt mit einer Stirnwand 104 und einer Seitenwand 106. Der Bereich zwischen der Stirnwand 104 und Seitenwand 106 bildet eine nach oben und nach zwei Seiten offene Ausnehmung 102, wobei auch diese Ausnehmung 102 in einem Schnitt parallel zur Stirnwand 104 gesehen eine konkave Krümmung aufweist und eine neunte Anlagefläche 101 bildet. Die Ausnehmung 102 ist von ihrer Geometrie her so gestaltet, dass sie beispielsweise die untere Endbereichskontur einer Flasche 19 bereichsweise aufnehmen kann.

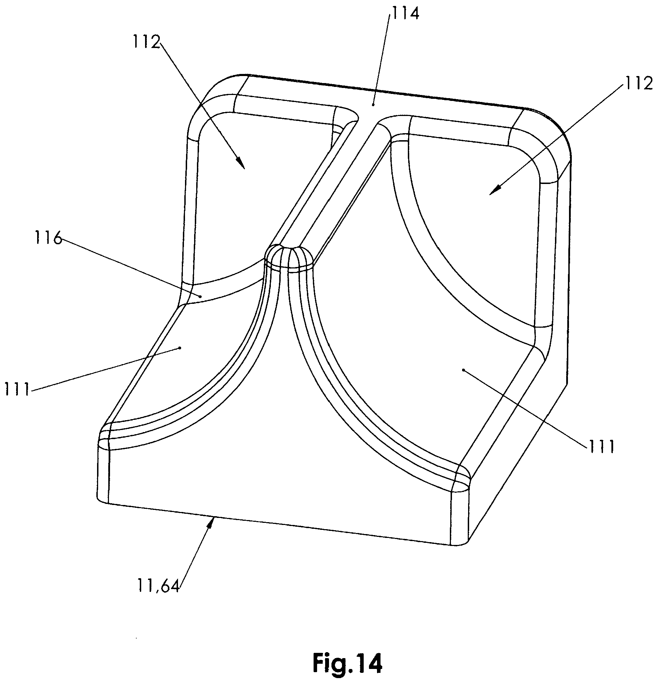

Das in Fig. 14 dargestellte zehnte Fixierelement 110 stellt praktisch eine spiegelbildliche Verdopplung des neunten Fixierelements 100 gemäß Fig. 13 entlang der Seitenwand 106 als Spiegelachse dar. Dadurch entsteht eine Mittelwand 116, die mittig an die Stirnwand 114 angeformt ist. Im Ergebnis sind somit zwei gegenüberliegende Ausnehmungen 112 mit konkaver zehnter Anlagefläche 111 vorhanden.

Die Anordnung des achten, neunten und zehnten Fixierelements 90, 100,110 zur Fixierung von liegenden Flaschen ist in Fig. 1 auf der Grundplatte 12 im rechten Randbereich dargestellt. Das achte Fixierelement 90 dient zur Aufnahme des Flaschenhalses der Flaschen 19. Im Seitenbereich ist gegenüberliegend jeweils ein neuntes Fixierelement 100 angeordnet. Zwischen den beiden neunten Fixierelementen 100 ist das zehnte Fixierelement 110 vorhanden. Dadurch können wie in Fig. 1 dargestellt problemlos zwei nebeneinander liegende Flaschen 19 auch mit unterschiedlicher Flaschenhöhe fixiert werden. Die Stirnwand 104, die Seitenwand 106 des neunten Fixierelements 100 und die Stirnwand 114 und die Mittelwand 116 des zehnten Fixierelements 110 bilden die Lagerung für den unteren Flaschenbereich, wobei in Verbindung mit dem achten Fixierelement 90 für den Flaschenhals eine zuverlässige Fixierung gewährleistet wird.

Sämtliche Fixierelemente 20, 30, 40, 50, 60, 70, 80,90,100,110 sind so ausgestaltet, dass die jeweils zu fixierenden Inventargegenstände problemlos von oben eingeführt und auch von oben her wieder entnommen werden können.

Die dargestellten Fixierelemente stellen lediglich Ausführungsbeispiele von möglichen Formen dar. Es können problemlos andere Formen umgesetzt werden. Durch den lösbaren Anschluss der Fixierelemente auf der Grundplatte ist eine große Variabilität gegeben. Die Fixierelemente können problemlos wieder verwendet werden, wenn Inventargegenstände mit anders gearteten Abmessungen fixiert werden müssen. Durch die rasterförmige Anordenbarkeit der Fixierelemente wird ein Fixiersystem geschaffen, in dem Inventargegenstände in kompakter Form lösbar fixiert werden können.

## Patentansprüche

1. Fixiersystem (10) zur Lagesicherung von Inventargegenständen, wie beispielsweise Gläser (15,17), Töpfe (18), Tassen (16), Becher (14), Teller, Flaschen (19) und dergleichen Haushaltsgegenstände in Land-, Luft- oder Wasserfahrzeugen, wie beispielsweise Wohnmobile, Wohnwagen, Lastkraftwagen, Schiffen, Flugzeugen mit
- einer Grundplatte (12), auf der mehrere Fixierelemente (20, 30,40, 50, 60, 70, 80, 90, 100, 110) befestigbar sind, die über Anlageflächen an den Inventargegenständen zumindest bereichsweise, anlegbar, insbesondere formschlüssig anlegbar, sind, wobei
- die Fixierelemente (20, 30, 40, 50, 60, 70, 80, 90, 100, 110) und die Grundplatte (12) so ausgebildet sind, dass die Fixierelemente (20, 30, 40,50,60, 70, 80,90,100,110) ohne Einsatz von Werkzeugen lösbar an der Oberseite der Grundplatte in einem beliebigen gewünschten Raster, entsprechend der jeweiligen Konturmaße der Inventargegenstände anordenbar und verbindbar sind,
- die Fixierelemente (20, 30, 40, 50, 60, 70, 80, 90, 100, 110) jeweils unterseitig zumindest bereichsweise eine Klettverschlussfläche (11) aufweisen und die Grundplatte (12) eine Oberfläche aufweist, die so ausgebildet ist, dass sie mit der Klettverschlussfläche (11) der Fixierelemente (20, 30, 40, 50, 60, 70, 80, 90, 100, 110) lösbar verbindbar ist,
- die Fixierelemente (30, 40, 50, 60, 70, 80) als Körperelemente mit einer in einer Draufsicht gesehen polygonartigen Umfangskontur ausgebildet sind mit einer, zwei, drei oder vier Anlageflächen (31, 41, 51) für den jeweiligen Inventargegenstand und
- die Grundplatte (12) aus mit einer Schere oder einem Messer zuschneidbaren Material besteht,
- **dadurch gekennzeichnet, dass**
- ein erstes Fixierelement (20) als L-förmiges Element ausgebildet ist, mit einem stehenden Schenkel (22) und einem liegenden Schenkel (23), wobei auf der Unterseite des liegenden Schenkels die Klettverschlussfläche (11) vorhanden ist und die Innenseite des stehenden Schenkels (22) die Anlagefläche (21) bildet,
- ein zweites und drittes Fixierelement (30, 40, 60, 70) als Körperelement mit einer in einer Draufsicht gesehen dreieckförmigen Umfangskontur ausgebildet ist, wobei die Anlagefläche (31) des zweiten Fixierelements (30, 60) an der Hypotenusenseite und die Anlageflächen (41) des dritten Fixierelements (40, 70) an den Kathetenseiten vorhanden sind,
- ein viertes Fixierelement (50) als Körperelement mit einer in einer Draufsicht gesehen Viereckumfangskontur ausgebildet ist, wobei die Anlagefläche (51) auf einer, zwei, drei oder vier Umfangsseiten vorhanden ist,
- die Anlagefläche/n (21, 41, 51) eine konkave Kontur aufweist/en.

2. Fixiersystem nach Anspruch 1,
- **dadurch gekennzeichnet, dass**
- die Grundplatte (12) beziehungsweise die Oberseite der Grundplatte (12) aus Velours besteht.

3. Fixiersystem nach einem oder mehreren der vorstehenden Ansprüche,
- **dadurch gekennzeichnet, dass**
- die Fixierelemente (20, 30,40,50, 60, 70, 80, 90, 100, 110) aus Elastomerkunststoff, insbesondere geschäumtem Kunststoff, insbesondere aus PU bestehen.

4. Fixiersystem nach einem oder mehreren der vorstehenden Ansprüche,
- **dadurch gekennzeichnet, dass**
- das Fixierelement (60, 70, 80) im Bereich der Anlagefläche/n (31, 41, 51) unterseitig eine angeformte Vorsprungeinheit (24) aufweist.

5. Fixiersystem nach einem oder mehreren der Ansprüche 1 bis 3,
- **dadurch gekennzeichnet, dass**
- ein Fixierelement (90) eine einseitig seitliche und nach oben offene Ausnehmung (92) mit zwei gegenüberliegenden Seitenwänden (96) und einer Stirnwand (94) aufweist.

6. Fixiersystem nach einem oder mehreren der Ansprüche 1 bis 3,
- **dadurch gekennzeichnet, dass**
- ein Fixierelement (100) eine zweiseitig aneinandergrenzend seitliche und nach oben offene Ausnehmung (102) mit einer Seitenwand (106) und einer Stirnwand (104) aufweist.

7. Fixiersystem nach einem oder mehreren der Ansprüche 1 bis 3,
- **dadurch gekennzeichnet, dass**
- ein Fixierelement (110) zwei einer Mittelwand (116) gegenüberliegende seitlich und nach oben offene Ausnehmungen (112) mit einer gemeinsamen Stirnwand (114) aufweist.

8. Fixiersystem nach einem oder mehreren der Ansprüche 5 bis 7,
- **dadurch gekennzeichnet, dass**
- die Ausnehmung/en (92, 102, 112) zumindest bereichsweise eine in Schnittrichtung parallel zur Stirnwand konkave Oberflächenkontur (91, 101, 111) aufweist/en.

9. Fixiersystem nach einem oder mehreren der vorstehenden Ansprüche
- **dadurch gekennzeichnet, dass**
- die Anlagefläche/n (31, 41, 51) im oberen Randbereich eine Fase (26) aufweist/en.

## Claims

1. Fixing system (10) for securing the position of inventory items, for example glasses (15, 17), saucepans (18), cups (16), beakers (14), plates, bottles (19) and similar domestic items in land-based vehicles, aircraft or watercraft, for example camper vans, caravans, lorries, ships and aeroplanes, the fixing system having
- a base panel (12), on which can be fastened a plurality of fixing elements (20, 30, 40, 50, 60, 70, 80, 90, 100, 110) which, at least in part, can be positioned, in particular in a form-fitting manner, against the inventory items via abutment surfaces, wherein
- the fixing elements (20, 30, 40, 50, 60, 70, 80, 90, 100, 110) and the base panel (12) are designed such that the fixing elements (20, 30, 40, 50, 60, 70, 80, 90, 100, 110) can be arranged and connected in a releasable manner, without any tools being used, on the upper side of the base panel in any desired unit-spacing arrangement, in a manner corresponding to the respective contour dimensions of the inventory items,
- the fixing elements (20, 30, 40, 50, 60, 70, 80, 90, 100, 110) have on their undersides in each case, at least in part, a hook-and-loop-fastener surface (11), and the base panel (12) has a surface which is designed such that it can be connected in a releasable manner to the hook-and-loop-fastener surface (11) of the fixing elements (20, 30, 40, 50, 60, 70, 80, 90, 100, 110),
- the fixing elements (30, 40, 50, 60, 70, 80) are designed in the form of body elements with a polygonal circumferential contour, as seen in plan view, having one, two, three or four abutment surfaces (31, 41, 51) for the respective inventory item, and
- the base panel (12) consists of material which can be cut to size using a pair of scissors or a knife,
- **characterized in that**
- a first fixing element (20) is designed in the form of an L-shaped element with an upright leg (22) and a horizontal leg (23), wherein the hook-and-loop-fastener surface (11) is present on the underside of the horizontal leg and the inner side of the upright leg (22) forms the abutment surface (21),
- a second and third fixing element (30, 40, 60, 70) is designed in the form of a body element with a triangular circumferential contour, as seen in plan view, wherein the abutment surface (31) of the second fixing element (30, 60) is present on the hypotenuse side and the abutment surfaces (41) of the third fixing element (40, 70) are present on the cathetus sides,
- a fourth fixing element (50) is designed in the form of a body element with a quadrilateral circumferential contour, as seen in plan view, wherein the abutment surface (51) is present on one, two, three or four sides of the circumference,
- the abutment surface/s (21, 41, 51) has/have a concave contour.

2. Fixing system according to Claim 1,
- **characterized in that**
- the base panel (12) or the upper side of the base panel (12) consists of velour.

3. Fixing system according to one or both of the preceding claims,
- **characterized in that**
- the fixing elements (20, 30, 40, 50, 60, 70, 80, 90, 100, 110) consist of elastomeric plastic, in particular foamed plastic, in particular of PU.

4. Fixing system according to one or more of the preceding claims,
- **characterized in that**
- in the region of the abutment surface/s (31, 41, 51), the fixing element (60, 70, 80) has a protrusion unit (24) integrally formed on its underside.

5. Fixing system according to one or more of Claims 1 to 3,
- **characterized in that**
- a fixing element (90) has a recess (92) which is open upwards and on one side and has two opposite side walls (96) and an end wall (94).

6. Fixing system according to one or more of Claims 1 to 3,
- **characterized in that**
- a fixing element (100) has a recess (102) which is open upwards and on two adjacent sides and has a side wall (106) and an end wall (104).

7. Fixing system according to one or more of Claims 1 to 3,
- **characterized in that**
- a fixing element (110) has two recesses (112) which are located opposite of a central wall (116), are open upwards and to the sides and have a common end wall (114).

8. Fixing system according to one or more of Claims 5 to 7,
- **characterized in that**
- the recess/es (92, 102, 112), at least in part, has/have a concave surface contour (91, 101, 111), as seen in section parallel to the end wall.

9. Fixing system according to one or more of the preceding claims,
- **characterized in that**
- the abutment surface/s (31, 41, 51) has/have a chamfer (26) in the upper peripheral region.

## Revendications

1. Système de fixation (10) pour le blocage en position d'objets d'inventaire, comme par exemple des verres (15, 17), des casseroles (18), des tasses (16), des gobelets (14), des assiettes, des bouteilles (19) et des objets ménagers similaires dans des véhicules terrestres, aériens ou marins, comme par exemple des camping-cars, des caravanes, des camions, des bateaux, des avions, avec
- une plaque de base (12), sur laquelle peuvent être fixés plusieurs éléments de fixation (20, 30, 40, 50, 60, 70, 80, 90, 100, 110), qui peuvent être appliqués au moins localement, de préférence appliqués par emboîtement, par des faces d'appui sur les objets d'inventaire, dans lequel
- les éléments de fixation (20, 30, 40, 50, 60, 70, 80, 90, 100, 110) et la plaque de base (12) sont configurés de telle manière que les éléments de fixation (20, 30, 40, 50, 60, 70, 80, 90, 100, 110) puissent être disposés et assemblés sans utilisation d'outils de façon amovible sur le côté supérieur de la plaque de base selon un motif désiré quelconque, selon la dimension du contour respectif des objets d'inventaire,
- les éléments de fixation (20, 30, 40, 50, 60, 70, 80, 90, 100, 110) présentent respectivement sur le côté inférieur au moins localement une face à fermeture velcro (11) et la plaque de base (12) présente une surface, qui est configurée de telle manière qu'elle puisse être assemblée de façon amovible avec la surface à fermeture velcro (11) des éléments de fixation (20, 30, 40, 50, 60, 70, 80, 90, 100, 110),
- les éléments de fixation (30, 40, 50, 60, 70, 80) sont réalisés sous forme d'éléments physiques avec un contour périphérique de type polygonal dans une vue en plan, avec une, deux, trois ou quatre faces d'application (31, 41, 51) pour l'objet d'inventaire respectif, et
- la plaque de base (12) est constituée d'une matière pouvant être découpée avec des ciseaux ou un couteau, **caractérisé en ce que**
- un premier élément de fixation (20) est constitué par un élément en forme de L, avec une branche dressée (22) et une branche couchée (23), dans lequel la face à fermeture velcro (11) se trouve sur le côté inférieur de la branche couchée et le côté intérieur de la branche dressée (22) forme la face d'application (21),
- un deuxième et un troisième éléments de fixation (30, 40, 60, 70) sont réalisés sous la forme d'éléments physiques avec un contour périphérique triangulaire dans une vue en plan, dans lequel la face d'application (31) du deuxième élément de fixation (30, 60) se trouve sur le côté de l'hypoténuse et les faces d'application (41) du troisième élément de fixation (40, 70) se trouvent sur les côtés des cathètes,
- un quatrième élément de fixation (50) est réalisé sous la forme d'un élément physique avec un contour périphérique quadrangulaire dans une vue en plan, dans lequel la face d'application (51) se trouve sur une, deux, trois ou quatre faces périphériques,
- la/les face(s) d'application (21, 41, 51) présente(nt) un contour concave.

2. Système de fixation selon la revendication 1, **caractérisé en ce que** la plaque de base (12) ou le côté supérieur de la plaque de base (12) se compose de velours.

3. Système de fixation selon une ou plusieurs des revendications précédentes, **caractérisé en ce que** les éléments de fixation (20, 30, 40, 50, 60, 70, 80, 90, 100, 110) se composent d'une matière plastique élastomère, en particulier de matière plastique cellulaire, en particulier de PU.

4. Système de fixation selon une ou plusieurs des revendications précédentes, **caractérisé en ce que** l'élément de fixation (60, 70, 80) présente dans la région de la face d'application (31, 41, 51) sur le côté inférieur une unité saillante façonnée (24).

5. Système de fixation selon une ou plusieurs des revendications 1 à 3, **caractérisé en ce qu'**un élément de fixation (90) présente un évidement (92) d'un côté et ouvert vers le haut avec deux parois latérales opposées (96) et une paroi frontale (94).

6. Système de fixation selon une ou plusieurs des revendications 1 à 3, **caractérisé en ce qu'**un élément de fixation (100) présente un évidement (102) à deux côtés adjacents et ouvert vers le haut avec une paroi latérale (106) et une paroi frontale (104).

7. Système de fixation selon une ou plusieurs des revendications 1 à 3, **caractérisé en ce qu'**un élément de fixation (110) présente deux évidements (112) latéralement opposés à une paroi médiane (116) et ouverts vers le haut avec une paroi frontale commune (114).

8. Système de fixation selon une ou plusieurs des revendications 5 à 7, **caractérisé en ce que** le/les évidement(s) (92, 102, 112) présente(nt) au moins localement un contour de paroi concave (91, 101, 111) dans une direction de coupe parallèle à la paroi frontale.

9. Système de fixation selon une ou plusieurs des revendications précédentes, **caractérisé en ce que** la/les face(s) d'application (31, 41, 51) présente(nt) un chanfrein (26) dans la région de bord supérieure.
